# EUROPEAN PATENT SPECIFICATION

(11) **EP 4 028 449 B1**
(45) Date of publication and mention of the grant of the patent: **15.05.2024**
(21) Application number: 20768564.5
(22) Date of filing: 08.09.2020
(51) Int. Cl.: C08G 73/14, C08G 73/10

(54) **PROCESS FOR THE MANUFACTURE OF POLYAMIDE-IMIDE POLYMER**
VERFAHREN ZUR HERSTELLUNG VON POLYAMIDIMIDPOLYMER
PROCÉDÉ DE FABRICATION DE POLYMÈRE POLYAMIDE-IMIDE

(30) Priority: 09.09.2019 US 201962897473 P
(43) Date of publication of application: 20.07.2022
(73) Proprietor: Solvay Specialty Polymers USA, LLC, Alpharetta, Georgia 30005-3914 (US)
(72) Inventor: FLORES, Joel, Alpharetta, GA 30004 (US); JEOL, Stéphane, 69230 Saint-Genis-Laval (FR)
(74) Representative: Kraus & Lederer PartGmbB
(86) International application number: PCT/EP2020/074992
(87) International publication number: WO 2021/048074

(56) References cited:
- JP-A- 2017 186 560
- US-A- 3 661 863
- US-A1- 2011 160 407
- US-B2- 8 222 365

## Description

### Technical Field

The present invention relates to a polyamide-imide (PAI) polymer and to a process for its manufacture.

### Background Art

Polyamide-imides (PAI) are high performance polymers possessing outstanding thermal, chemical and mechanical properties and are, therefore, suitable for demanding applications where high mechanical strength, stiffness and low friction in combination with high temperature, corrosion, and wear resistance are required. For these reasons, they are widely used in the aerospace and automotive industries, insulations, coatings, solvent resistant membranes and electronic devices.

PAI are polymers that contain both amide and imide functionalities in the backbone. Hence, PAI polymers tend to exhibit hybrid properties of polyamides and polyimides. The increased rigidity of the imide group imparts better hydrolytic, chemical and thermal stability to the polymers as well as superior mechanical properties especially to polymers based on aromatic monomers. Most commercial PAI polymers are indeed aromatic, typically based on trimellitic acid, trimellitic anhydride or trimellitic acid halide.

During the PAI preparation process, an imide is formed from the reaction between two neighboring carboxylic acid groups (or derivatives thereof, such as acid halides, acid anhydrides, esters) and primary amine-containing molecules. An amic acid is formed initially, which closes into an imide ring upon further removal of a molecule of water.

The imidization reaction generally requires high temperatures, especially for PAI polymers based on aromatic monomers. The use of high temperatures, however, leads to crosslinking side reactions, which result in PAI polymers with limited processability or even in thermoset-like structures. While said PAI polymers are chemically stable, their use is limited for certain applications due to their low flow during a melt processing, their thermal intractability in conventional processing methods (i.e. their low capability of being melt processed) and their low solubility.

Several attempts have been made to improve these properties, while at the same time maintaining the good thermal and mechanical performances of said PAI polymers, notably by grafting the polymers, blending them with other types of polymers and forming composites with additives and inorganic fibers.

Other attempts to improve the solubility and the processability of said PAl polymers involved the incorporation into their polymeric chains of flexible linkages and alicyclic units. For example, JP 2017-186560 discloses a PAI based on cyclohexane-1,2,4-tricarboxylic acid-1,2-anhydride (CTA) (instead of trimellitic anhydride) and m-xylylenediamine (MXD). The process described in this document to obtain said PAI takes place in solution in organic solvent. The use of organic solvents exhibits major disadvantages. First, the recovery of the polymer after synthesis requires additional stages, such as the precipitation of the polymer from a nonsolvent and the washing and the drying of the polymer. Secondly, some solvents are toxic and thus dangerous to man and the environment. Third, the polymer usually comprises residual amounts of solvent which can sometimes impact the mechanical performances of the polymer or its use for certain applications, and in other cases the solvent can cause color issues.

US 2011/160407 relates to a process for the preparation of PAI polymers by melt polymerization of at least one aromatic organic compound having carboxyl groups, of at least one diamine compound and optionally of at least one diacid compound. This document more precisely describes the use of trimellitic acid, pyromellitic acid, their anhydrides, their esters or their amides as the aromatic organic compound. However, being aromatic, the imide linkage of a PAI based on trimellitic acid, pyromellitic acid, their anhydrides, their esters or their amides imparts colors to the polymer (yellow to orange to red). None of the above-listed documents describes an organic-solvent-free polymerization process to prepare a PAI polymer based on a cycloaliphatic acid component, for example a cycloaliphatic tricarboxylic acid.

US 3,661,863 (D1) discloses the melt polymerization of a diamine and 1,2,3-tripropane tricarboxylic acid which is not a cyclic acid as claimed.

US 8,222,365 (D2) does not disclose metl polymerization.

US 2011/160407 (D3) does not disclose a polymerization with a cycloaliphatic acid.

JP 2017/186560 (D4) does not disclose the process of claim 1.

### Summary of invention

The present invention relates to a process for preparing a polyamide-imide (PAI) polymer by melt polymerization of:
a) at least one cycloaliphatic acid component comprising three carboxyl moieties selected from the group consisting of carboxylic acid, acid anhydride and ester functional groups; and
b) at least one diamine component, said process comprising a step of maintaining the reaction mixture in a state of uniform liquid during polymerization at a temperature of at least 200°C.

A polyamide-imide (PAI) polymer is obtained by said process.

The Applicant has surprisingly found that the PAI polymer prepared by the process according to the invention shows an interesting set of properties, such as low and controlled branching. The PAI polymer according to the invention exhibits enhanced solubility, melt-processability and moldability, while maintaining good thermal and mechanical properties, such as a high glass transition temperature (Tg). In particular, the PAI polymer according to the invention can be easily processed using conventional polymer processing technologies such as extrusion and injection molding. Furthermore, the PAI polymer according to the invention can be easily converted into films and other articles.

The Applicant has also interestingly found that the article comprising the PAI polymer or the polymer composition is transparent and colorless and shows a low yellowness index.

### Detailed description of the invention

An object of the present invention is a process as disclosed in claim 1.

The present process provides a colorless, transparent PAI polymer, with low branching and good mechanical properties. Such PAI polymer can therefore be processed following standard polymer processing technologies, such as extrusion and injection molding. It can be converted into films and other articles.

In the present description, unless otherwise indicated, the following terms are to be meant as follows.

The term "cycloaliphatic moiety" means an organic group which contains at least one aliphatic ring and does not contain aromatic rings. The cycloaliphatic moiety can be substituted with one or more straight or branched alkyl or alkoxy groups and/or halogen atoms and/or can comprise one or more heteroatoms, like nitrogen, oxygen and sulfur, in the ring.

The term "alkyl", as well as derivative terms such as "alkoxy", include within their scope straight chains, branched chains and cyclic moieties. Examples of alkyl groups are methyl, ethyl, 1-methylethyl, propyl, 1,1-dimethylethyl, and cyclo-propyl. Unless specifically stated otherwise, each alkyl group may be unsubstituted or substituted with one or more substituents selected from but not limited to hydroxy, sulfo, C₁-C₆ alkoxy, C₁-C₆ alkylthio, provided that the substituents are sterically compatible and the rules of chemical bonding and strain energy are satisfied.

The term "halogen" or "halo" includes fluorine, chlorine, bromine and iodine, with fluorine being preferred.

### CYCLOALIPHATIC ACID COMPONENT

The cycloaliphatic acid component is according to any of formulae (I) and (II): 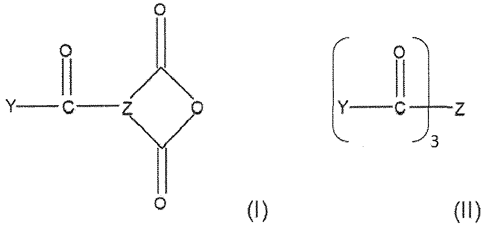 wherein:
- Z is a cycloaliphatic moiety selected from the group consisting of substituted or unsubstituted, monocyclic or polycyclic groups having 5 to 50 carbon atoms, preferably 6 to 18 carbon atoms;
- Y is ORₐ, with Rₐ being H or an alkyl, preferably an alkyl having 1 to 5 carbon atoms, and
- in formula (II), at least two Y(C=O) are attached to 2 adjacent carbon atoms of Z, meaning that at least two carboxyl moieties are in ortho position with respect to one another.

Preferably, Z is a cycloaliphatic moiety comprising from one to four aliphatic rings. In case Z comprises more than one aliphatic ring, i.e. two aliphatic rings or more, said aliphatic rings may be condensed or may be bridged together either directly or by the following bridges: -O-,-CHz-, -C(CH₃)₂-, -C(CF₃)₂-, -(CF₂)_{q}-, with q being an integer from 1 to 5. The term "directly" means that the aliphatic rings are connected together through a bond.

Preferably, Z is a trivalent cycloaliphatic moiety selected from the group consisting of moieties of formulae (III-A) to (III-D): 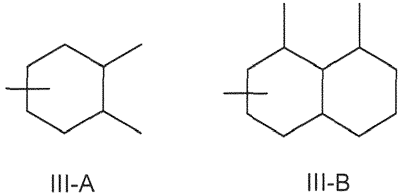 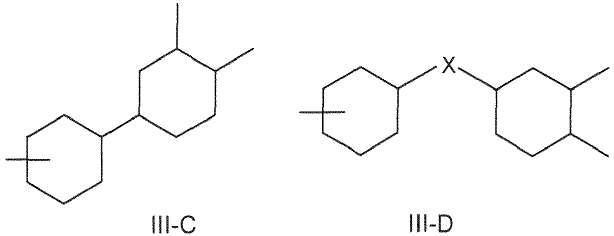 and corresponding substituted structures, with X being -O-, -CH₂-, - C(CH₃)₂-, -C(CF₃)₂-, -(CF₂)_{q}-, with q being an integer from 1 to 5.

In a preferred embodiment, the cycloaliphatic acid component is according to any of formulae (Ia) and (IIa):

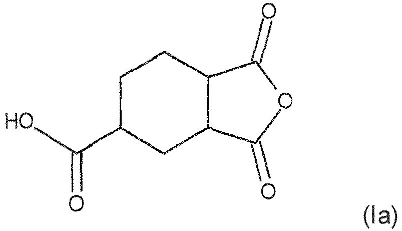

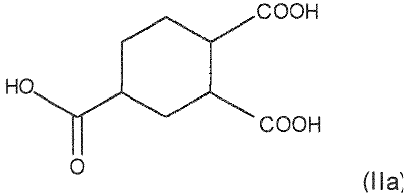

According to this embodiment, the process of the present invention comprises:
- the melt polymerization of the cycloaliphatic acid component according to formula (Ia) and at least one diamine component,
- the melt polymerization of the cycloaliphatic acid component according to formula (Ila) and at least one diamine component, or
- the melt polymerization of a mixture of the cycloaliphatic acid components according to formulae (Ia) and (Ila) and at least one diamine component.

### DIAMINE COMPONENT

The diamine component used in the process of the present invention may be aliphatic, cycloaliphatic or aromatic. The diamine component comprises at least two amine moieties -NH₂ and optionally comprises one or several heteroatoms, said heteroatom(s) being preferably selected among N, S and O.

The diamine component preferably presents the following formula:

H₂N-R-NH₂ (IV)

wherein R is a divalent hydrocarbon radical, in particular a divalent aliphatic, cycloaliphatic or aromatic hydrocarbon radical. The radical R preferably comprises from 4 to 50 carbon atoms.

The diamine component is preferably selected from the group consisting of putrescine, cadaverine, hexamethylenediamine, 2,2,4-trimethyhexamethylenediamine, 2,4,4-trimethyhexamethylenediamine, 1,9-diaminononane, 2-methyl-1,8-diaminooctane, dodecamethylenediamine, 1,3-bis(aminomethyl)cyclohexane, 1,4-bis(aminomethyl)cyclohexane, isophorone diamine, 1,4-diaminocyclohexane, 1,3-diaminocyclohexane, 4,4'-methylenebis(cyclohexylamine), 4,4'-methylenebis(2-methylcyclohexylamine), p-xylylenediamine and m-xylylenediamine.

The diamine component may consist in a mixture of distinct diamines, for example two or three distinct diamines.

Preferably at least 50 mol.%, more preferably at least 65 mol%, even more preferably at least 80 mol.%, most preferably at least 95 mol.%, of the diamine component is cycloaliphatic, based on the total number of moles of the diamine component involved in the process.

According to a preferred embodiment, the diamine component consists in a mixture of cycloaliphatic diamines, for example two or three distinct cycloaliphatic diamines.

According to another preferred embodiment, the diamine component consists in only one cycloaliphatic diamine. In this case, the diamine is preferably 1,3-bis(aminomethyl)cyclohexane.

### DIACID COMPONENT

According to an embodiment, the reaction mixture subjected to melt polymerization further comprises at least one diacid component or derivative thereof.

The expression "derivative thereof' is intended to denote whichever derivative which is susceptible of reacting in polycondensation conditions to yield an amide bond. Examples of amide-forming derivatives include acyl groups, for example aliphatic acyl and aromatic acyl groups, substituted or unsubstituted. Examples of these acyl groups are formyl, acetyl, propionyl, butyryl, isobutyryl, valeryl, isovaleryl, pivaloyl, benzoyl, toluoyl and xyloyl.

This additional diacid component may be aliphatic, cycloaliphatic or aromatic. Said diacid component comprises at least two carboxylic acid moieties -COOH and optionally comprises one or several heteroatoms, said heteroatom(s) being preferably selected among N, S and O.

The diacid component preferably presents the following formula:

HOOC-R'-COOH (V)

wherein R' is a divalent hydrocarbon radical, in particular a divalent aliphatic, cycloaliphatic or aromatic hydrocarbon radical. The radical R' preferably comprises from 4 to 18 carbon atoms.

The diacid component is preferably selected from the group consisting of adipic acid, azelaic acid, sebacic acid, dodecanedioic acid, isophthalic acid, terephthalic acid, 2,6-naphthalene dicarboxylic acid, 4,4'-bibenzoic acid, 5-hydroxyisophthalic acid, 5-sulfophthalic acid, 1,3-cyclohexanedicarboxylic acid, 1,4-cyclohexanedicarboxylic acid, and mixture thereof.

### MELT POLYMERIZATION

The process according to the present invention comprises the melt polymerization of the above identified components. More precisely, said process comprises a step of maintaining the reaction mixture in a state of uniform liquid during polymerization at a temperature of at least 200°C.

The term "melt polymerization" means that the reaction mixture is maintained in a state of uniform liquid during polymerization at a temperature of at least 200°C.

Within the context of the present invention, the term "state of uniform liquid" means that the reaction mixture remains in a fluidized state without any solidification and/or precipitation of the resulting PAI polymer.

During polymerisation, the reaction mixture is constantly heated to increasing temperatures such that the PAI polymer under preparation is in a molten state. The minimal temperature at which the reaction mixture should be heated can generally be determined based on the melting or softening point of the PAI polymer being prepared. The melting or softening point of the PAI polymer being prepared may vary over polymerisation time based on the quantity of reactants involved in the reaction, notably the quantity of limiting reactant if for example one of the reactants is progressively added in the reaction mixture. In this case, the melting or softening point of the PAI polymer being prepared can be determined based on the complete conversion of the limiting reactant monomer. As the limiting reactant may be added sequentially in the reaction mixture, several temperature rises/increments may be necessary in order to prepare the PAI polymer of the present invention. Each step of the polymerization process is then conducted at a temperature not less than the melting or softening point of the PAI polymer being produced.

The process is conducted in the melt, in the absence of an organic solvent. In other words, the process is organic-solvent-free, meaning that the polymerization medium does not comprise an organic solvent or comprises an amount of organic solvent which is less than 1 wt.%, less than 0.5 wt.% or even less than 0.2 wt%, based on the total weight of the reaction mixture. The process of the present invention may however use water.

According to different embodiments, the process of the invention is carried out in the absence of added water or in the presence of an amount of added water less than 50 wt.%, preferably less than 40 wt.%, more preferably less than 30 wt.%, even more preferably less than 15 wt.%, most preferably less than 5 wt.%, based on the total weight of the reaction mixture.

Accordingly, the polymerization medium can be an aqueous solution comprising the above identified components (i.e. said at least one cycloaliphatic acid component, said at least one diamine component and optionally said at least one diacid component), or a liquid comprising the said components. Preferably, the polymerization medium comprises water as solvent, since this facilitates the stirring of the medium and thus its homogeneity.

According to various embodiments, either the cycloaliphatic acid component or the diamine component is added sequentially, progressively or continuously in the reaction mixture.

Preferably, the reaction mixture contains said cycloaliphatic acid component and said diamine component at an equivalent ratio ranging from 0.8 to 1.2 preferably from 0.9 to 1.1 more preferably from 0.95 to 1.05, even more preferably from 0.97 to 1.03.

When the process of the invention employs a diacid component, the diacid component and the diamine component can be introduced, at least in part, in the form of a salt of the diacid and diamine components.

The PAl polymer is generally obtained by polycondensation between the cycloaliphatic acid component(s), the diamine component(s) and optionally the diacid component(s) to form polyamide-imide chains with formation of the elimination product, in particular water. Preferably, the water generated during the process is evaporated, for example by fractional distillation using a condenser, at a pressure between 1 mbar and 30 bar.

The reaction mixture is maintained in a state of uniform liquid during polymerization at a temperature of at least 200°C, preferably from 215°C to 300°C, in order to evaporate the elimination product, in particular the water (present initially in the polymerization medium and/or formed during the polycondensation), while preventing any formation of solid phase in order to prevent the mixture from setting solid.

The process of the present invention may be carried out under pressure, for at least some parts of the process. In these instances, a maximum pressure of 20 bar, preferably a maximum pressure of 10 bar, more preferably a maximum pressure of 3 bar, is used. The end of the process is anyhow preferably performed at low pressure (vacuum or atmospheric pressure), in order to drive the reaction towards completion and remove more easily the water formed during the reaction.

The process can be carried out in equipment made from materials inert toward the the above identified components (i.e. said at least one cycloaliphatic acid component, said at least one diamine component and optionally said at least one diacid component). In this case, the equipment is chosen in order to provide enough contact between said components and so that the removal of volatile reaction products, notably the water, is feasible. Suitable equipment includes agitated reactors, extruders and kneaders. The reaction vessel is preferably equipped with stirring means, for example rotating shaft.

A chain-limiter or end-capping agent can be added in the reaction mixture to control the molecular weight. A chain-limiter or end-capping agent is a molecule that has only one reactive site with amine and/or carboxylic acid. Examples of end-capping agents are monoamines, such as benzylamine and 1-hexaneamine, and monocarboxylic acids, such as acetic acid, propionic acid, benzoic acid, phthalic acid or anhydride.

Preferably, the order of introduction of the components into the reaction vessel during the process is as follows: water is added first, then the diamine component is charged and finally the cycloaliphatic acid component and, optionally, the diacid component are added.

Preferably, an inert gas, such as nitrogen gas, is introduced into the reaction vessel to replace the atmosphere in the vessel. Preferably, the reaction vessel is purged with said inert gas both before and after charging all the above identified components. Preferably, a flow of inert gas is kept during the process.

### POLYAMIDE-IMIDE POLYMER

A polyamide-imide (PAI) polymer is obtained by the above defined process.

Preferably, said PAl polymer has a glass transition temperature (Tg) of at least 100°C, more preferably of at least 120°C, even more preferably of at least 140°C, most preferably of at least 150°C, as determined by DSC according to ASTM D3418.

Preferably, said PAI polymer has a glass transition temperature (Tg) of at most 250°C, more preferably of at most 240°C, even more preferably of at most 230°C, most preferably of at most 220°C, as determined by DSC according to ASTM D3418.

Preferably, said PAl polymer has a number average molecular weight (Mn) of at least 5,000 g/mol, more preferably of at least 10,000 g/mol, even more preferably of at least 15,000 g/mol, as determined by gel permeation chromatography (GPC) using a fluorinated solvent, 2 HFIP gel columns and UV-vis/refractive index detectors.

Preferably, said PAI polymer has a number average molecular weight (Mn) of at most 50,000 g/mol, more preferably of at most 45,000 g/mol, even more preferably of at most 40,000 g/mol, as determined by gel permeation chromatography (GPC) using a fluorinated solvent, 2 HFIP gel columns and UV-vis/refractive index detectors.

Advantageously, said PAl polymer is soluble in a variety of solvents, notably in hexafluoro-2-propanol, o-cresol, sulfuric acid 98% and dimethylformamide.

The PAI polymer obtained by the process of the invention in the molten form can be directly formed or can be processed using conventional polymer processing technologies such as extrusion and injection molding for subsequent forming after melting.

Furthermore, the PAI polymer can be easily converted into films and other articles. Since the PAI polymer is soluble in a variety of organic solvents, films can advantageously be made from casting a solution containing the PAI polymer and then evaporating the solvent, following standard processes which are known to the person skilled in the art. In particular, said films can be made by dissolving the PAI polymer in a solvent to obtain a solution, casting the solution on a substrate and finally evaporating the solvent.

Said PAl polymer can be used in a large number of applications, in particular in the manufacture of yarns, fibers or filaments, or films, or in the forming of articles by injection molding, extrusion or extrusion/blow molding. It can in particular be used in engineered plastic compositions.

### POLYMER COMPOSITION

The PAI polymer may be comprised in a polymer composition.

Preferably, the PAI polymer is present in the polymer composition in an amount of at least 10 wt.%, more preferably at least 15 wt.%, even more preferably at least 20 wt.%, most preferably at least 25 wt.%, based on the total weight of the polymer composition.

Preferably, the PAI polymer is present in the polymer composition in an amount of at most 99 wt.%, more preferably at most 95 wt.%, even more preferably at most 80 wt.%, most preferably at most 60 wt.%, based on the total weight of the polymer composition.

According to an embodiment, the PAI polymer is present in the polymer composition in an amount ranging from 10 to 70 wt.%, preferably from 20 to 60 wt.%, based on the total weight of the polymer composition.

According to an embodiment, said polymer composition comprises at least one additional additive selected from the group consisting of reinforcing agents, colorants, dyes, pigments, lubricants, plasticizers, flame retardants, nucleating agents, heat stabilizers, light stabilizers, antioxidants, processing aids, fusing agents, electromagnetic absorbers and combinations thereof.

Reinforcing agents, also referred to as reinforcing fillers or fibers, may be selected from the group consisting of fibrous reinforcing fillers, particulate reinforcing fillers and mixtures thereof. A fibrous reinforcing filler is considered herein to be a material having length, width and thickness, wherein the average length is significantly larger than both the width and the thickness. Generally, a fibrous reinforcing filler has an aspect ratio, defined as the average ratio between the length and the largest of the width and the thickness of at least 5, at least 10, at least 20 or at least 50.

Fibrous reinforcing fillers include glass fibers, carbon or graphite fibers, and fibers formed of silicon carbide, alumina, titania, boron and the like, and may include mixtures comprising two or more such fibers. According to an embodiment, said fibers are flat fibers. Non-fibrous reinforcing fillers include notably talc, mica, titanium dioxide, potassium titanate, silica, kaolin, chalk, alumina, mineral fillers, and the like.

According to this embodiment, the PAI polymer is advantageously mixed with said at least one additional additive. Preferably, mixing the PAI polymer and said at least one additional additive is carried out by dry blending and/or melt compounding. More preferably, mixing the polyamide (PA) and said at least one additional additive is carried out by melt compounding, notably in continuous or batch devices. Such devices are well known to those skilled in the art. Examples of suitable continuous devices are screw extruders. Preferably, melt compounding is carried out in a twin-screw extruder.

### ARTICLE

An article can comprise said PAI polymer or said polymer composition.

The article is preferably a molded article. Preferably, said article is molded from the PAI polymer or the polymer composition comprising said PAl polymer using methods well known in the art, for example by methods including, but not limited to, injection molding, blow molding, rotomolding, compression molding or extrusion molding.

The invention will now be described with reference to the following examples, whose purpose is merely illustrative and not intended to limit the scope of the invention.

### Experimental section

### Materials

Cyclohexane-1,2,4-tricarboxylic acid-1,2-anhydride (CTA), available from Mitsubishi Gas Chemicals.

1,3-bis(aminomethyl)cyclohexane (1,3-BAC), available from Mitsubishi Gas Chemicals.

Hexamethylenediamine (HMDA), available from Ascend Performance Materials.

4,4'-methylenebis(cyclohexylamine) (PACM), available from Sigma-Aldrich.

Phosphorus acid, available from Sigma-Aldrich.

### Methods

### Thermal analyses

The thermal properties were determined using differential scanning calorimetry (DSC). DSC analyses were carried out on DSC Q200-5293 TA Instrument according to ASTM. Three scans were used for each DSC test: 1^{st} heating cycle to 300°C at 20.00°C/min; 1^{st} cooling cycle to 30.00°C at 20.00°C/min; 2^{nd} heating cycle to 300.00°C at 20.00°C/min. The glass transition temperature (Tg) was determined from the transition midpoint during the 2^{nd} heating cycle.

### GPC

Mn was measured by gel permeation chromatography (GPC).

### Solubility

A 5-mg sample of the PAI polymer was added into 5 ml of solvent. The resulting mixture was stirred at room temperature for 24 to 48 hours and any dissolution or softening of the sample was noted. If the sample was completely dissolved, it was considered soluble. If the sample did not show any change in appearance after 48 hours, it was considered insoluble. Solubility in hexafluoro-2-propanol (HFIP), o-cresol, sulfuric acid 98% and dimethylformamide (DMF) was tested.

### Yellowness testing

Films having a thickness of 0.1-0.2 mm were prepared in a hot-press (280°C, 2000 Ib-f). The yellowness index was measured on said films using a X-Rite Ci7800 spectrophotometer.

### Mechanical testing

PAI 1 polymer synthesized as described below was ground in a mill grinder and dried overnight at 120°C under vacuum. Then, it was injection molded into Type V tensile bars according to ASTM D3641, using a mold temperature of 140°C, a melt temperature of 290°C and an injection pressure of 6 bars. Mechanical tests were performed on injection molded test specimens with a gauge length of 0.3 inch using the Instron 5569 machine and according to ASTM D638 at 23.2 °C with 54.7% humidity. The notched Izod impact strength was determined by ASTM D256 using injection molded test specimens.

### Synthesis methods

### Polyamide-imide 1 (PAI 1)

CTA (53.9 g), 1,3-BAC (39.1 g), phosphorus acid (0.032 g) and deionized water (42 g) were charged into a 300-ml reactor. Then, the reactor was purged with nitrogen for 5 minutes and stirred, and the polymerization reaction was carried out by heating to 280°C within 2 hours. The steam generated was released upon reaching the target temperature. A vacuum was then applied to the reactor and the so obtained molten polymer was then held at this condition for another hour. Upon cooling, the polymer was taken out of the reactor and used for analyses.

### Polyamide-imide 2 (PAI 2)

CTA (55.6 g), 1,3-BAC (25.9 g), HMDA (11.7 g), phosphorus acid (0.032g) and deionized water (42 g) were charged into a 300-ml reactor. Then, the reactor was purged with nitrogen for 5 minutes and stirred, and the polymerization reaction was carried out by heating to 280°C within 2 hours. The steam generated was released upon reaching the target temperature. A vacuum was then applied to the reactor and the so obtained molten polymer was then held at this condition for another hour. Upon cooling, the polymer was taken out of the reactor and used for analyses.

### Polyamide-imide 3 (PAI 3)

CTA (50.7 g), PACM (27.1 g), HMDA (15.0 g), phosphorus acid (0.032 g) and deionized water (42 g) were charged into a 300-ml reactor. Then, the reactor was purged with nitrogen for 5 minutes and stirred, and the polymerization reaction was carried out by heating to 280°C within 2 hours. The steam generated was released upon reaching the target temperature. A vacuum was then applied to the reactor and the so obtained molten polymer was then held at this condition for another hour. Upon cooling, the polymer was taken out of the reactor and used for analyses.

### Results

Table 1 shows the glass transition temperature (Tg), the number average molecular weight (Mn), the yellowness index and the solubility results of PAI 1, PAI 2 and PAI 3 polymers prepared according to the invention.

Table 2 shows mechanical properties of PAI 1.

**Table 1**

| | PAI 1 | PAI 2 | PAI 3 |
|---|---|---|---|
| CTA (mol) | 100 | 100 | 100 |
| 1,3-BAC (mol) | 100 | 65 | - |
| HMDA (mol) | - | 35 | 50 |
| PACM (mol) | - | - | 50 |
| | | | |
| Tg[°C] | 176 | 150 | 160 |

| Mn [g/mol] | 21,290 | 34,240 | 19,160 |
|---|---|---|---|
| Yellowness index | 7.1 | 5.3 | 4.1 |
| Solubility in HFIP | soluble | soluble | soluble |
| Solubility in o-cresol | soluble | soluble | soluble |
| Solubility in sulphuric acid | soluble | soluble | soluble |
| Solubility in DMF | soluble | soluble | soluble |

**Table 2**

| | PAI 1 |
|---|---|
| CTA (mol) | 100 |
| 1,3-BAC (mol) | 100 |

| Mechanical properties | |
|---|---|
| Modulus of elasticity (MPa) | 3,220 |
| Tensile stress at yield (MPa) | 113 |
| Tensile elonqation at yield (%) | 4.9 |
| Tensile stress at break (MPa) | 108 |
| Tensile elonqation at break (%) | 5.5 |
| IZOD Unnotched impact (ft-lb/in) | 10.5 |

As evidenced in Table 1 above, high molecular weight PAI polymers based on CTA and different diamines (1,3-BAC, HMDA and PACM) were successfully prepared. Said PAl polymers show glass transition temperatures (Tg) ranging between 150 and 176°C; the Tg could easily be adjusted by changing the nature and quantity of the diamine component.

Said PAl polymers also show a very low yellowness index.

Moreover, these PAI polymers revealed to be soluble in several organic solvents, which indicates that they have low and controlled branching.

As evidenced in Table 2, PAI 1 was melt processed and parts were made by injection molding, which indicates that PAI 1 also exhibits melt-processability and moldability. PAI 1 also shows excellent mechanical properties, with a combination of high tensile modulus and strength.

## Claims

1. A process for preparing a polyamide-imide (PAI) polymer by melt polymerization of:
a) at least one cycloaliphatic acid component comprising three carboxyl moieties selected from the group consisting of carboxylic acid, acid anhydride and ester functional groups; and
b) at least one diamine component,
said process comprising a step of maintaining the reaction mixture in a state of uniform liquid during polymerization at a temperature of at least 200°C;
wherein said at least one cycloaliphatic acid component is according to any of formulae (I) and (II): 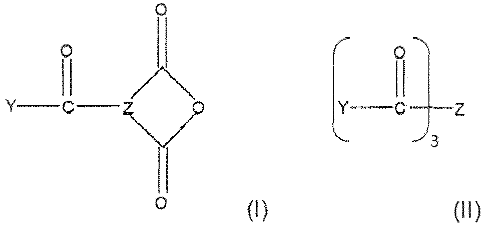
wherein:
• Z is a cycloaliphatic moiety selected from the group consisting of substituted or unsubstituted, monocyclic or polycyclic groups having 5 to 50 carbon atoms, preferably 6 to 18 carbon atoms;
• Y is ORₐ, with Rₐ being H or an alkyl, preferably an alkyl having 1 to 5 carbon atoms, and
• at least two Y(C=O) are attached to 2 adjacent carbon atoms of Z in formula (II).

2. The process of claim 1, wherein Z is a cycloaliphatic moiety comprising from one to four aliphatic rings, said aliphatic rings being condensed or bridged together either directly or by the following bridges: -O-,-CH_{Z}-, -C(CH₃)₂-, - C(CF₃)₂-, - (CF₂)_{q}-, with q being an integer from 1 to 5.

3. The process of claim 1 or 2, wherein Z is a trivalent cycloaliphatic moiety selected from the group consisting of moieties having formulae (III-A) to (III-D): 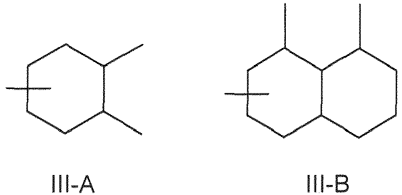 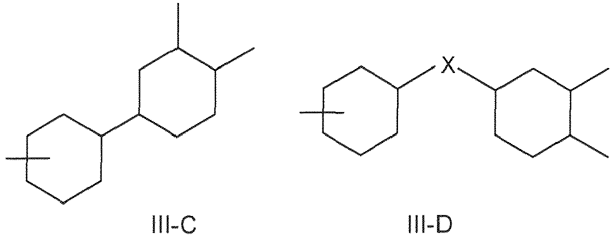 with X being -O-, -CH₂-, -C(CH₃)₂-, -C(CF₃)₂-, -(CF₂)_{q}-, with q being an integer from 1 to 5.

4. The process of any one of claims 1 to 3, wherein said at least one cycloaliphatic acid component is according to any of formulae (Ia) and (Ila):

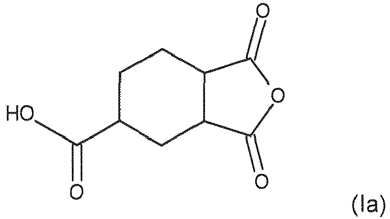

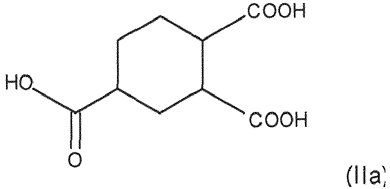

5. The process of any one of the preceding claims, wherein the diamine component is an aliphatic, cycloaliphatic or aromatic component comprising at least two amine moieties -NH₂, optionally one or several heteroatoms, preferably selected among N, S and O,

6. The process of any one of claims 1 to 4, wherein the diamine component is selected from the group consisting of putrescine, cadaverine, hexamethylenediamine, 2,2,4-trimethyhexamethylenediamine, 2,4,4-trimethyhexamethylenediamine, 1,9-diaminononane, 2-methyl-1,8-diaminooctane, dodecamethylenediamine, 1,3-bis(aminomethyl)cyclohexane, 1,4-bis(aminomethyl)cyclohexane, isophorone diamine, 1,4-diaminocyclohexane, 1,3-diaminocyclohexane, 4,4'-methylenebis(cyclohexylamine), 4,4'-methylenebis(2-methylcyclohexylamine), p-xylylenediamine, m-xylylenediamine, and mixture thereof.

7. The process of any one of the preceding claims, wherein the reaction mixture further comprises at least one diacid component or derivative thereof, which is aliphatic, cycloaliphatic or aromatic and optionally comprises one or several heteroatoms, preferably selected among N, S and O.

8. The process of any one of claims 1 to 6, wherein the reaction mixture further comprises at least one diacid component which is selected from the group consisting of adipic acid, azelaic acid, sebacic acid, dodecanedioic acid, isophthalic acid, terephthalic acid, 2,6-naphthalene dicarboxylic acid, 4,4'-bibenzoic acid, 5-hydroxyisophthalic acid, 5-sulfophthalic acid, 1,3-cyclohexanedicarboxylic acid, 1,4-cyclohexanedicarboxylic acid, and mixture thereof.

9. The process of any one of the preceding claims, wherein the process is carried out in the absence of added water or in the presence of an amount of added water less than 50 wt.% based on the total weight of the reaction mixture.

10. The process of any one of the preceding claims, wherein either the cycloaliphatic acid component or the diamine component is added sequentially, progressively or continuously in the reaction mixture.

11. The process of any one of the preceding claims, wherein the water generated during the polymerisation is evaporated, for example by fractional distillation using a condenser, at a pressure between 1 mbar and 30 bar.

12. The process of any one of the preceding claims, wherein at least 50 mol.%, more preferably at least 65 mol%, even more preferably at least 80 mol.%, most preferably at least 95 mol.%, of the diamine component is cycloaliphatic, based on the total number of moles of the diamine component involved in the process.

13. The process of any one of the preceding claims, wherein the polymerization medium does not comprise an organic solvent or comprises an organic solvent, the proportion of which is less than 1 wt.%, this proportion being based on the total weight of the reaction mixture.

14. The process of any one of the preceding claims, wherein the PAI polymer has a glass transition temperature (Tg) of:
- at least 100°C, preferably at least 120°C, more preferably at least 140°C, even more preferably at least 150°C, and/or
- at most 250°C, preferably at most 240°C, more preferably at most 230°C, even more preferably at most 220°C,
as determined by DSC according to ASTM D3418.

15. The process of any one of the preceding claims, wherein the PAI polymer has a number average molecular weight (Mn) of:
- at least 5,000 g/mol, preferably of at least 10,000 g/mol, more preferably of at least 15,000 g/mol, and/ or
- at most 50,000 g/mol, preferably at most 45,000 g/mol, more preferably at most 40,000 g/mol,
as determined by gel permeation chromatography; and/or wherein the PAI polymer is soluble in hexafluoro-2-propanol, o-cresol, sulfuric acid 98%, dimethylformamide.

## Patentansprüche

1. Verfahren zur Herstellung eines Polyamidimid (PAI)-Polymers durch Schmelzpolymerisation von:
a) mindestens einer cycloaliphatischen Säurekomponente, die drei Carboxylanteile ausgewählt aus der Gruppe bestehend aus Carbonsäure-, Säureanhydrid- und Esterfunktionsgruppen umfasst; und
b) mindestens einer Diaminkomponente,
wobei das Verfahren einen Schritt des Haltens der Reaktionsmischung in einem Zustand von gleichförmiger Flüssigkeit während der Polymerisation bei einer Temperatur von mindestens 200 °C umfasst; wobei die mindestens eine cycloaliphatische Säurekomponente gemäß einer der Formeln (I) und (II) ist: 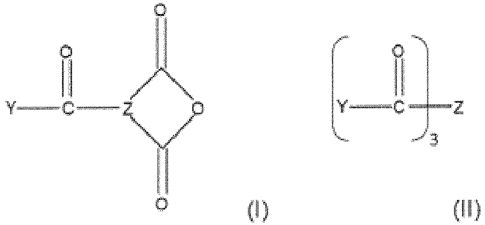 wobei:
• Z ein cycloaliphatischer Anteil ausgewählt aus der Gruppe bestehend aus substituierten oder unsubstituierten, monocyclischen oder polycyclischen Gruppen mit 5 bis 50 Kohlenstoffatomen, vorzugsweise 6 bis 18 Kohlenstoffatomen ist;
• Y ORₐ ist, wobei Rₐ H oder ein Alkyl ist, vorzugsweise ein Alkyl mit 1 bis 5 Kohlenstoffatomen, und
• mindestens zwei Y(C=O) an 2 benachbarte Kohlenstoffatome von Z in Formel (II) gebunden sind.

2. Verfahren nach Anspruch 1, wobei Z ein cycloaliphatischer Anteil ist, der ein bis vier aliphatische Ringe umfasst, wobei die aliphatischen Ringe entweder direkt oder durch die folgenden Brücken kondensiert oder miteinander verbrückt sind: -O-, -CH₂-, -C(CH₃)₂-, -C(CF₃)₂-, -(CF₂)_{q}-, wobei q eine ganze Zahl von 1 bis 5 ist.

3. Verfahren nach Anspruch 1 oder 2, wobei Z ein dreiwertiger cycloaliphatischer Anteil ausgewählt aus der Gruppe bestehend aus Anteilen mit den Formeln (III-a) bis (III-D) ist: 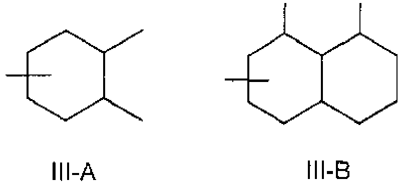 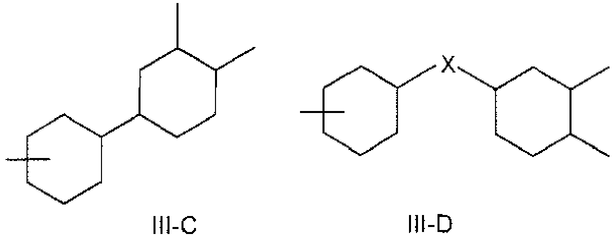 wobei X -O-, -CH₂-, -C(CH₃)₂-, -C(CF₃)₂-, -(CF2)_{q}-ist, wobei q eine ganze Zahl von 1 bis 5 ist.

4. Verfahren nach einem der Ansprüche 1 bis 3, wobei die mindestens eine cycloaliphatische Säurekomponente gemäß einer der Formeln (Ia) und (IIa) ist:

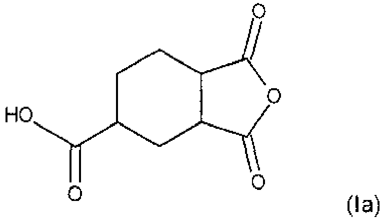

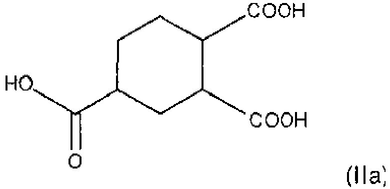

5. Verfahren nach einem der vorhergehenden Ansprüche, wobei die Diaminkomponente eine aliphatische, cycloaliphatische oder aromatische Komponente ist, die mindestens zwei Aminanteile -NH₂, gegebenenfalls ein oder mehrere Heteroatome, vorzugsweise ausgewählt aus N, S und O umfasst.

6. Verfahren nach einem der Ansprüche 1 bis 4, wobei die Diaminkomponente ausgewählt ist aus der Gruppe bestehend aus Putrescin, Cadaverin, Hexamethylendiamin, 2,2,4-Trimethylhexamethylendiamin, 2,4,4-Trimethylhexamethylendiamin, 1,9-Diaminononan, 2-Methyl-1,8-diaminooctan, Dodecamethylendiamin, 1,3-Bis-(aminomethyl)cyclohexan, 1,4-Bis(aminomethyl)-cyclohexan, Isophorondiamin, 1,4-Diaminocyclohexan, 1,3-Diaminocyclohexan, 4,4'-Methylenbis(cyclohexylamin), 4,4'-Methylenbis(2-methylcyclohexylamin), p-Xylylendiamin, m-Xylylendiamin und Mischung davon.

7. Verfahren nach einem der vorhergehenden Ansprüche, wobei die Reaktionsmischung des Weiteren mindestens eine Disäurekomponente oder ein Derivat davon umfasst, die/das aliphatisch, cycloaliphatisch oder aromatisch ist und gegebenenfalls ein oder mehrere Heteroatome, vorzugsweise ausgewählt aus N, S und O, umfasst.

8. Verfahren nach einem der Ansprüche 1 bis 6, wobei die Reaktionsmischung des Weiteren mindestens eine Disäurekomponente umfasst, die ausgewählt ist aus der Gruppe bestehend aus Adipinsäure, Azelainsäure, Sebacinsäure, Dodecandisäure, Isophthalsäure, Terephthalsäure, 2,6-Naphthalindicarbonsäure, 4,4'-Dibenzoesäure, 5-Hydroxyisophthalsäure, 5-Sulfophthalsäure, 1,3-Cyclohexandicarbonsäure, 1,4-Cyclohexandicarbonsäure und Mischung davon.

9. Verfahren nach einem der vorhergehenden Ansprüche, wobei das Verfahren in Abwesenheit von zugefügtem Wasser oder in Anwesenheit einer Menge an zugefügtem Wasser von weniger als 50 Gew.% durchgeführt wird, bezogen auf das Gesamtgewicht der Reaktionsmischung.

10. Verfahren nach einem der vorhergehenden Ansprüche, wobei entweder die cycloaliphatische Säurekomponente oder die Diaminkomponente aufeinander folgend, progressiv oder kontinuierlich der Reaktionsmischung zugefügt werden.

11. Verfahren nach einem der vorhergehenden Ansprüche, wobei das während der Polymerisation erzeugte Wasser, beispielsweise durch fraktionierte Destillation unter Verwendung eines Kühlers, bei einem Druck zwischen 1 mbar und 30 bar verdampft wird.

12. Verfahren nach einem der vorhergehenden Ansprüche, wobei mindestens 50 Mol.%, bevorzugter mindestens 65 Mol.%, noch bevorzugter mindestens 80 Mol.%, am meisten bevorzugt mindestens 95 Mol.% der Diaminkomponente cycloaliphatisch sind, bezogen auf die Gesamtanzahl der Mole der Diaminkomponente, die an dem Verfahren beteiligt sind.

13. Verfahren nach einem der vorhergehenden Ansprüche, wobei das Polymerisationsmedium kein organisches Lösungsmittel umfasst, oder ein organisches Lösungsmittel umfasst, dessen Anteil weniger als 1 Gew.% beträgt, wobei dieser Anteil auf dem Gesamtgewicht der Reaktionsmischung basiert.

14. Verfahren nach einem der vorhergehenden Ansprüche, wobei das PAI-Polymer eine Glasübergangstemperatur (Tg) von:
- mindestens 100 °C, vorzugsweise mindestens 120 °C, bevorzugter mindestens 140 °C, noch bevorzugter mindestens 150 °C, und/oder
- höchstens 250 °C, vorzugsweise höchstens 240 °C, bevorzugter höchstens 230 °C, noch bevorzugter höchstens 220 °C aufweist,
wie mittels DSC gemäß ASTM D3418 bestimmt wird.

15. Verfahren nach einem der vorhergehenden Ansprüche, wobei das PAI-Polymer ein durchschnittliches Molekulargewicht (Zahlenmittel) (Mn) von:
- mindestens 5000 g/mol, vorzugsweise mindestens 10.000 g/mol, bevorzugter mindestens 15.000 g/mol, und/oder
- höchstens 50.000 g/mol, vorzugsweise höchstens 45.000 g/mol, bevorzugter höchstens 40.000 g/mol aufweist,
bestimmt mittels Gelpermeationschromatographie; und/oder wobei das PAI-Polymer in Hexafluor-2-propanol, o-Kresol, Schwefelsäure 98 %, Dimethylformamid löslich ist.

## Revendications

1. Procédé pour la préparation d'un polymère de type polyamide-imide (PAI) par polymérisation en fusion de :
a) au moins un composant de type acide cycloaliphatique comprenant trois groupements carboxyle choisis dans le groupe constitué par des groupes fonctionnels acide carboxylique, anhydrides d'acide et ester ; et
b) au moins un composant de type diamine,
ledit procédé comprenant une étape de maintien du mélange réactionnel dans un état de liquide uniforme pendant la polymérisation à une température d'au moins 200 °C ;
ledit au moins un composant de type acide cycloaliphatique étant selon l'une quelconque parmi les formules (I) et (II) : 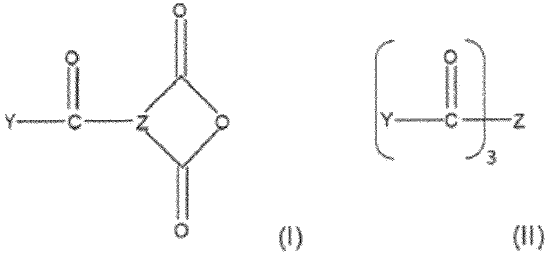
• Z étant un groupement cycloaliphatique choisi dans le groupe constitué par des groupes monocycliques ou polycycliques substitués ou non substitués ayant 5 à 50 atomes de carbone, préférablement 6 à 18 atomes de carbone ;
• Y étant ORₐ, Rₐ étant H ou un alkyle, préférablement un alkyle ayant 1 à 5 atomes de carbone, et
• au moins deux Y(C=O) étant fixés à 2 atomes de carbone adjacents de Z dans la formule (II).

2. Procédé selon la revendication 1, Z étant un groupement cycloaliphatique comprenant d'un à quatre cycles aliphatiques, lesdits cycles aliphatiques étant condensés ou pontés ensemble soit directement, soit par les ponts suivants : -O-, - CH₂-, -C(CH₃)₂-, -C(CF₃)₂-, -(CF₂)_{q}-, q étant un entier de 1 à 5.

3. Procédé selon la revendication 1 ou 2, Z étant un groupement cycloaliphatique trivalent choisi dans le groupe constitué par des groupements ayant les formules (III-A) à (III-D) : 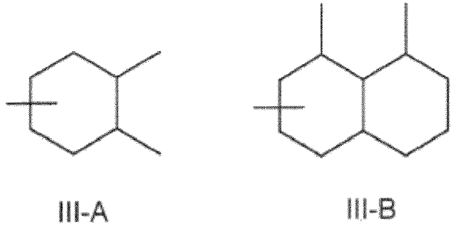 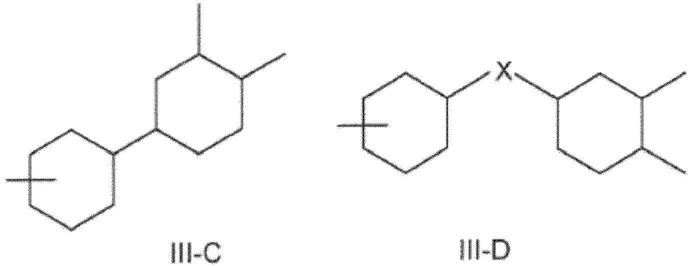 X étant -O-, -CH₂-, -C(CH₃)₂-, -C(CF₃)₂-, -(CF₂)_{q}-, q étant un entier de 1 à 5.

4. Procédé selon l'une quelconque des revendications 1 à 3, ledit au moins un composant de type acide cycloaliphatique étant selon l'une quelconque des formules (Ia) et (IIa) :

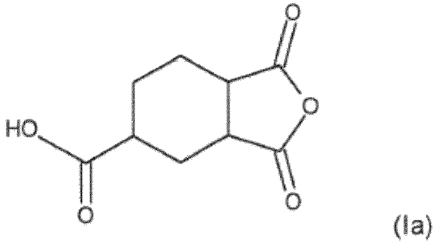

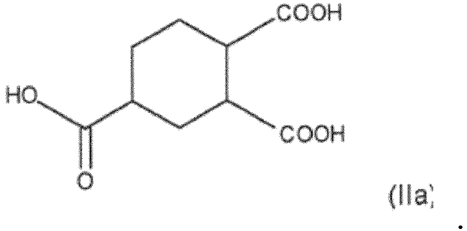

5. Procédé selon l'une quelconque des revendications précédentes, le composant de type diamine étant un composant aliphatique, cycloaliphatique ou aromatique comprenant au moins deux groupements amine -NH₂, éventuellement un ou plusieurs hétéroatomes, préférablement choisis parmi N, S et O.

6. Procédé selon l'une quelconque des revendications 1 à 4, le composant de type diamine étant choisi dans le groupe constitué par la putrescine, la cadavérine, l'hexaméthylènediamine, la 2,2,4-triméthyhexaméthylènediamine, la 2,4,4-triméthyhexaméthylènediamine, le 1,9-diaminononane, le 2-méthyl-1,8-diaminooctane, la dodécaméthylènediamine, le 1,3-bis(aminométhyl)cyclohexane, le 1,4-bis(aminométhyl)cyclohexane, l'isophoronediamine, le 1,4-diaminocyclohexane, le 1,3-diaminocyclohexane, la 4,4'-méthylènebis(cyclohexylamine), la 4,4'-méthylènebis(2-méthylcyclohexylamine), la p-xylylènediamine, la m-xylylènediamine et un mélange correspondant.

7. Procédé selon l'une quelconque des revendications précédentes, le mélange réactionnel comprenant en outre au moins un composant de type diacide ou un dérivé correspondant, qui est aliphatique, cycloaliphatique ou aromatique et éventuellement comprend un ou plusieurs hétéroatomes, préférablement choisis parmi N, S et O.

8. Procédé selon l'une quelconque des revendications 1 à 6, le mélange réactionnel comprenant en outre au moins un composant de type diacide qui est choisi dans le groupe constitué par l'acide adipique, l'acide azélaïque, l'acide sébacique, l'acide dodécanedioïque, l'acide isophtalique, l'acide téréphtalique, l'acide 2,6-naphtalène dicarboxylique, l'acide 4,4'-bibenzoïque, l'acide 5-hydroxyisophtalique, l'acide 5-sulfophtalique, l'acide 1,3-cyclohexanedicarboxylique, l'acide 1,4-cyclohexanedicarboxylique, et un mélange correspondant.

9. Procédé selon l'une quelconque des revendications précédentes, le procédé étant mis en œuvre en l'absence d'eau ajoutée ou en la présence d'une quantité d'eau ajoutée inférieure à 50 % en poids sur la base du poids total du mélange réactionnel.

10. Procédé selon l'une quelconque des revendications précédentes, soit le composant de type acide cycloaliphatique, soit le composant de type diamine étant ajouté séquentiellement, progressivement ou de manière continue dans le mélange réactionnel.

11. Procédé selon l'une quelconque des revendications précédentes, l'eau générée pendant la polymérisation étant évaporée, par exemple par distillation fractionnée en utilisant un condenseur, à une pression comprise entre 1 mbar et 30 bars.

12. Procédé selon l'une quelconque des revendications précédentes, au moins 50 % en moles, plus préférablement au moins 65 % en moles, encore plus préférablement au moins 80 % en moles, le plus préférablement au moins 95 % en moles, du composant de type diamine étant cycloaliphatique, sur la base du nombre total de moles du composant de type diamine impliqué dans le procédé.

13. Procédé selon l'une quelconque des revendications précédentes, le milieu de polymérisation ne comprenant pas un solvant organique ou comprenant un solvant organique, la proportion duquel étant inférieure à 1 % en poids, cette proportion étant basée sur le poids total du mélange réactionnel.

14. Procédé selon l'une quelconque des revendications précédentes, le polymère de type PAI ayant une température de transition vitreuse (Tg) de :
- au moins 100 °C, préférablement au moins 120 °C, plus préférablement au moins 140 °C, encore plus préférablement au moins 150 °C, et/ou
- au plus 250 °C, préférablement au plus 240 °C, plus préférablement au plus 230 °C, encore plus préférablement au plus 220 °C,
comme déterminée par DSC selon la norme ASTM D3418.

15. Procédé selon l'une quelconque des revendications précédentes, le polymère de type PAI ayant un poids moléculaire moyen en nombre (Mn) de :
- au moins 5 000 g/mole, préférablement d'au moins 10 000 g/mole, plus préférablement d'au moins 15 000 g/mole, et/ou
- au plus 50 000 g/mole, préférablement au plus 45 000 g/mole, plus préférablement au plus 40 000 g/mole,
comme déterminé par chromatographie à perméation de gel ;
et/ou le polymère de type PAI étant soluble dans l'hexafluoro-2-propanol, l'o-crésol, l'acide sulfurique à 98 %, le diméthylformamide.
